# EUROPÄISCHE PATENTSCHRIFT

(11) **EP 4 039 751 B1**
(45) Veröffentlichungstag und Bekanntmachung des Hinweises auf die Patenterteilung: **30.11.2022**
(21) Anmeldenummer: 21155843.2
(22) Anmeldetag: 08.02.2021
(51) Int. Cl.: C08L 89/00, C08K 3/04, C08L 89/06

(54) **KÖRPER, INSBESONDERE EIN FORMKÖRPER ODER EINE FOLIE, HERGESTELLT AUS EINER GIESS- ODER TEIGFÖRMIGEN MASSE ODER EINEM GRANULAT**
BODY, IN PARTICULAR A MOULDING OR A FILM MADE FROM A MOULDING OR DOUGH-LIKE MASS OR A GRANULATE
CORPS, EN PARTICULIER CORPS MOULÉ OU FEUILLE, FABRIQUÉ À PARTIR D'UNE MATIÈRE COULÉE OU PÂTEUSE OU D'UN GRANULAT

(43) Veröffentlichungstag der Anmeldung: 10.08.2022
(73) Patentinhaber: Udo Eckloff Unternehmensberatung, 72160 Horb am Neckar (DE)
(72) Erfinder: ECKLOFF, Udo, 72160 Horb am Neckar (DE)
(74) Vertreter: Richardt Patentanwälte PartG mbB

(56) Entgegenhaltungen:
- US-A- 1 807 570
- Anonymous: "To Try Today: 4 DIY Peel-Off Masks For Glowing Skin", , 18. Mai 2018 (2018-05-18), XP055826239, Gefunden im Internet: URL:https://wellinsiders.com/4-diy-peel-of f-masks-glowing-skin/ [gefunden am 2021-07-21]

## Beschreibung

Die Erfindung betrifft kompostierbare Verbundmaterialien sowie der auf dieser Basis hergestellte Produkte. Insbesondere betrifft die vorliegende Erfindung eine Trockenmischung, umfassend wenigstens ein pulverförmiges Bindemittel und einen ersten pulverförmigen Füllstoff, wobei die Trockenmischung eine biologische Abbaubarkeit aufweist und wobei die Trockenmischung durch Zugabe einer flüssigen Komponente zur Herstellung einer Masse eingesetzt werden kann. Weiterhin betrifft die vorliegende Erfindung eine kompostierbare gieß- oder teigförmigen Masse sowie Verfahren zur Herstellung der Masse und Verfahren zur Herstellung eines Körpers, insbesondere eines Formkörpers oder einer Folie, unter Verwendung der Masse.

Aus dem Stand der Technik sind dreidimensionale Körper und Bauteile aus zusammengesetzten Materialien bzw. Verbundwerkstoffen bekannt. Ebenso ist im Stand der Technik bekannt, dass ein Rohstoff aus einem Material bestehen kann, das eine Matrixmaterial darstellt, dass durch einen pulverförmigen Füllstoff aufgefüllt wird. Hierbei erfüllt die Matrix die Aufgabe den Füllstoff den nötigen Halt zu geben und der Füllstoff führt beispielsweise zu einer gewünschten Verstärkung mechanischer, chemischer oder physikalischer Eigenschaften, wie Elastizität, Biegefestigkeit, Gewicht oder Wärmeformbeständigkeit. Zusätzlich kann durch das Auffüllen mit Füllstoff das Auffüllen mit anderen, oftmals teureren, Grundstoffen vermieden werden ohne dass dies zu Nachteilen von Eigenschaften führt.

Als Matrixmaterial bzw. Bindemittel werden aufgrund der Beanspruchbarkeit und Dauerhaftigkeit im Stand der Technik bislang maßgeblich petrochemisch basierte Kunststoffe, wie beispielsweise Kunststoffe auf Basis von Polypropylen (PP), Polyethylene (PE), Polystyrol (PS), Polyvinylchlorid (PVC), Polycarbonat (PC), Acrylnitril-Butadien-Styrol (ABS), Polymethylmethacrylat (PMMA) sowie Polyethylenterephthalat (PET) verwendet. Als Füllstoff in Pulverform werden im Stand der Technik Füllstoffe wie Talkum, Kreide, Glimmer, EPDM, Bariumsulfat, Ruß, Keramikpulver oder Metallpulver verwendet.

Die vorgenannten Kunststoffe und Füllstoffe sind zwar ebenso für die Verarbeitung mittels beispielsweise Extrusion geeignet, jedoch ist ein zentraler Nachteil, welcher mit den vorgenannten Kunststoffen einhergeht, darin zu sehen, dass diese meistens nicht biologisch abbaubar bzw. kompostierbar sind, was mit entsprechenden Problemen in Bezug auf deren Entsorgung und Anwendung einhergeht.

Dementsprechend wurde im Stand der Technik eine Vielzahl von Lösungen zur Herstellung von Kunststoffprodukten aus Naturstoffen beschrieben. Beispielsweise beschreibt die DE 198 52 036 A1 die Herstellung von Kunststoff-Werkstoffen aus Naturkurzfasem wie Hanf, die mit einem pulverförmigen Polymer, hier Polyester, Polyurethane, Polyether und Polyalkohole sowie deren Derivate, gemischt werden. Die eingesetzten Rohstoffe der biologisch abbaubaren Kunststoffprodukte sind überwiegend natürlichen Ursprungs oder werden künstlich oder biotechnisch hergestellt. Weiterhin enthalten die Kunststoffe auch Additive in der unterschiedlichsten Art, um die Eigenschaften der Kunststoffe zu beeinflussen.

Die US 1 807 570 A offenbart ein hochviskoses Dichtungsmaterial, das auf einen peripheren kannelierten Deckel aufgebracht werden kann, um den Deckel mit einem Dosenkörper zu befestigen. Zu diesem Zweck wird das hochviskose Dichtungsmaterial in die Rillen des Deckels aufgebracht. Zur Geruchsabsorption wird dem Dichtungsmaterial eine kleine Menge an Adsorptionsmittel zugesetzt, beispielsweise Aktivkohle. Das Dichtungsmaterial besteht aus tierischem Protein wie beispielsweise Knochenleim, Gelatine, Casein oder Hämoglobin, das eine in Wasser quellende Lösung bildet.

Der Erfindung liegt daher die Aufgabe zugrunde, verbesserte Produkte bzw. Körper, insbesondere Formkörper oder Folien, bereitzustellen. Ebenso ist es eine Aufgabe der vorliegenden Erfindung, ein diesbezügliches Verfahren bereitzustellen, anhand dessen in effektiver Weise eine gieß- oder teigförmige Masse oder ein Granulat zur Herstellung eines Körpers hergestellt werden kann, sowie ein diesbezügliches Verfahren zur Herstellung eines Körpers.

Die der Erfindung zugrundeliegende Aufgabe wird durch die Merkmale der unabhängigen Ansprüche gelöst. Bevorzugte Ausführungsformen und zweckmäßige Weiterbildungen sind in den abhängigen Schutzansprüchen angegeben.

Ein Aspekt der vorliegenden Erfindung betrifft eine Trockenmischung bzw. Zusammensetzung. Die Trockenmischung umfasst 10 bis 93 Gew.-% (Gewichtsprozent) wenigstens eines pulverförmigen Bindemittels. Das Bindemittel umfasst ein Gemisch aus Gelatine und Hämoglobin. Weiterhin umfasst die Trockenmischung 7 bis 90 Gew.-% eines ersten pulverförmigen Füllstoffs, wobei der erste pulverförmige Füllstoff ein Pulver aus Verkohlung von Pflanzenmaterial gebildeter Kohle ist. Die vorliegenden Mengenangaben werden insbesondere jeweils derart gewählt, dass in der Summe, gegebenenfalls unter Einbezug optionaler weiterer Inhaltsstoffe, 100 Gew.-% resultieren.

Der erste pulverförmige Füllstoff ist, da er ein Pulver aus Verkohlung von Pflanzenmaterial gebildeter Kohle (auch als Pflanzenkohle oder Biokohle bezeichnet) ist, ein poröser Füllstoff und besitzt eine hohe innere (spezifische) Oberfläche.

Durch diese Eigenschaften eignet sich der erste pulverförmige Füllstoff beispielsweise als Bodenhilfsstoff, da er Trägermittel für Nährstoffe sowie Habitat für Mikroorganismen sein kann. Aufgrund der hohen Adsorptionskapazität ist es möglich, dass der pulverförmige erste Füllstoff bis zu der fünffachen Menge seines Eigengewichtes an Wasser und den darin gelösten Nährstoffen aufnimmt. Weiterhin kann der erste Füllstoff eine hohe Kationenaustauschkapazität (KAK) aufweisen, die das Auswaschen von mineralischen wie organischen Nährstoffen verhindert und insgesamt für eine höhere Nährstoffverfügbarkeit sorgt. Eine hohe KAK begünstigt zudem die Bindung von Schwermetallionen, wodurch die Bodenflora und Bodenfauna geschützt werden könnten. Weiterhin könnten die hohe Adsorptions- und Kationenaustauschkapazitäten des ersten Füllstoffs dazu führen, dass sich der erste Füllstoff als Nährstoffträger eignet. Die von dem ersten Füllstoff aufgenommenen Nährstoffe könnten dazu führen, dass Mikroorganismen Lebensräume in und um die Füllstoff finden. Dies könnte zu mikrobieller Belebung des Bodens führen, was Symbiosen von Mikroorganismen und Pflanzenwurzeln zugutekommen kann. Weiterhin könnte der erste pulverförmige Füllstoff, der ein Pulver aus Verkohlung von Pflanzenmaterial gebildeter Kohle ist, als aktive Kohlenstoffsenke in der Atmosphäre dienen, indem er z.B. Kohlenstoff aus dem natürlichen Kreislauf des Abbauprozesses von Biomaterial entzieht. Weiterhin ist der erste pulverförmige Füllstoff aufgrund seiner hohen Adsorptionskapazität dazu geeignet, in der Wasseraufbereitung eingesetzt zu werden, insbesondere zur Entfernung von Schwermetallen und refraktionären Stoffen.

Das pulverförmige Bindemittel umfasst in einem Beispiel Proteine oder besteht aus Proteinen, die ausgewählt sind aus der Gruppe bestehend aus Gelatine, Hämoglobin, Milcheiweiß und Gemischen davon. Erfindungsgemäß umfasst das Bindemittel ein Gemisch aus Gelatine und Hämoglobin. Da Gelatine, Hämoglobin und Milcheiweiß Proteine sind, ist das Bindemittel kompostierbar. Bei dem hier verwendeten Bindemittel kann es sich um Gelatine in Form von Pulver mit Bloomwerten zwischen 30 und 300 blgr (Bloom) handeln. Gelatine kann auch technische Gelatine sein, die Bloomwerte zwischen 100 und 250 blgr, insbesondere Bloomwerte zwischen 100 und 200 blgr (gemessen in einer 12,5%-Lösung) aufweist. Bevorzugt wird eine Gelatine verwendet, deren Bloomwert größer als 100 blgr aufweist, da höhere Bloomwerte auf eine höhere Gelierkraft und Viskosität hinweisen. Die Gelatine kann aus Reststoffen des Schlachtprozesses, wie Tierhäute, Knorpel oder Knochen hergestellt sein. Weiterhin kann es sich bei dem hier verwendeten Bindemittel um Hämoglobin in Form von Pulver handeln, das aus Tierblut beim Schlachtprozess gewonnen, vom Serum getrennt und als Pulver in den Handel gebracht wurde. Das hier verwendeten Hämoglobin weist Bloomwerte zwischen 30 und 125 blgr, insbesondere Bloomwerte zwischen 40 und 70 blgr (gemessen bei einem Mischverhältnis von 1/5 Hämoglobin und 4/5 Wasser) auf. Ebenso ist vorstellbar, dass Milcheiweißpulver als pulverförmige Bindemittel verwendet wird. Es ist vorstellbar, dass als Bindemittel ausschließlich Gelatine, insbesondere technische Gelatine verwendet wird. Durch die Verwendung von ausschließlich Gelatine, insbesondere technischer Gelatine, könnte, sofern ein Körper aus der Trockenmischung unter Verwendung oder Zugabe einer flüssigen Komponente hergestellt wird, ein elastischer Körper hergestellt werden. Ebenso könnte die ausschließliche Verwendung von Milcheiweiß als pulverförmiges Bindemittel, sofern ein Körper aus der Trockenmischung unter Verwendung oder Zugabe einer flüssigen Komponente hergestellt wird, dazu führen, dass ein elastischer Körper hergestellt wird. Ebenso ist vorstellbar, dass als Bindemittel ausschließlich Hämoglobin verwendet wird. Durch die ausschließliche Verwendung von Hämoglobin als Bindemittel, könnte, sofern ein Körper aus der Trockenmischung unter Verwendung oder Zugabe einer flüssigen Komponente hergestellt wird, dazu führen, dass der Körper hart und/oder steif ist bzw. kaum eine Elastizität aufweist. Zudem könnte die Verwendung von pulverförmigem Hämoglobin, da es günstiger in der Anschaffung ist als pulverförmige Gelatine oder Milcheiweißpulver, zu einer Kostenreduktion bei der Herstellung eines Körpers führen. Je nach Anforderungen an den herzustellenden Körper könnten somit Elastizität und Härte bereits durch die Bereitstellung eines entsprechenden Bindemittels eingestellt werden. Dementsprechend kann es ebenso sinnvoll sein, dass das Bindemittel ein Gemisch aus Gelatine und/oder Hämoglobin und/oder Milcheiweiß sein kann. Je nach Anforderungen an den herzustellenden Körper könnten somit Elastizität und Härte ebenfalls durch die Bereitstellung eines Bindemittelgemisches, mit unterschiedlichen Mengenanteilen der Bindemittel Gelatine und/oder Hämoglobin und/oder Milcheiweiß, eingestellt werden.

Da die Trockenmischung ein kompostierbares pulverförmiges Bindemittel und einen ersten pulverförmigen Füllstoff in Form eines Pulvers aus Verkohlung von Pflanzenmaterial gebildeter Kohle umfasst, ist die Trockenmischung insgesamt kompostierbar.

Beispielsweise kann die Trockenmischung aus 93 Gew.-% des pulverförmigen Bindemittels und 7 Gew.-% aus dem pulverförmigen Füllstoff oder aus 10 bis 90 Gew.-% des pulverförmigen Bindemittels und 10 bis 50 Gew.-% aus dem pulverförmigen Füllstoff oder aus 50 Gew.-% des pulverförmigen Bindemittels und 50 Gew.-% aus dem pulverförmigen Füllstoff oder aus 65 bis 88 Gew.-% des pulverförmigen Bindemittels und 12 bis 35 Gew.-% aus dem pulverförmigen Füllstoff bestehen.

Auf Basis der vorgenannten Mengenbereiche der jeweiligen Komponenten kann die zugrundeliegende Trockenmischung insbesondere hinsichtlich ihrer Verarbeitungs- und Materialeigenschaften, wie bereits oben für die möglichen Bindemittel dargestellt, weiter eingestellt werden, und zwar auch im Hinblick auf den jeweils vorliegenden Anwendungs- bzw. Einsatzbereich. Für den Fall, dass beispielsweise ein Formkörper aus der Trockenmischung unter Verwendung oder Zugabe einer flüssigen Komponente hergestellt werden soll, könnte beispielsweise Hämoglobin oder ein Gemisch aus Hämoglobin und Gelatine oder ein Gemisch aus Hämoglobin, Gelatine und Milcheiweiß als pulverförmiges Bindemittel verwendet werden. Für den Fall, dass beispielsweise eine biegsame Folie aus der Trockenmischung unter Verwendung oder Zugabe einer flüssigen Komponente hergestellt werden soll, könnte beispielsweise Gelatine, insbesondere technische Gelatine, oder ein Gemisch aus Gelatine und Hämoglobin oder ein Gemisch aus Gelatine, Milcheiweiß und Hämoglobin als pulverförmiges Bindemittel verwendet werden.

Nach einer Ausführungsform ist das das pulverförmige Bindemittel der Trockenmischung ein Gemisch aus pulverförmiger Gelatine und pulverförmigem Hämoglobin. Die Kombination aus Gelatine und Hämoglobin kann vorteilhaft sein, da bei Mischung in einer wässrigen Lösung ein natürlicher Schäumungsprozess entsteht. Zudem kann, sofern ein Körper aus der Trockenmischung unter Verwendung oder Zugabe einer flüssigen Komponente hergestellt wird, eine Reduzierung des spezifischen Gewichts des Körpers erreicht werden.

Für alle vorgenannten Ausführungsformen kann vorteilhaft vorgesehen sein, dass die Pulverpartikel des ersten Füllstoffs eine Partikelgröße von 1 µm bis 800 µm, von 10 µm bis 600 µm oder von 100 µm bis 400 µm, aufweisen. Die Partikelgröße kann entsprechend der Verwendung der Trockenmischung ausgewählt sein. Beispielsweise kann eine Trockenmischung mit einer Partikelgröße des ersten Füllstoffs zwischen 1 µm und 800 µm für die Herstellung einer Masse zur Herstellung eines nicht zur industriellen Verarbeitung vorgesehenen Körpers, insbesondere Formkörper oder Folie, sein. Für Körper, die industriell verarbeitet werden, z.B. durch mechanische Bearbeitungsverfahren wie Schneiden, Sägen, Bohren oder dergleichen bearbeitet werden, kann vorgesehen sein, dass die Partikelgröße des ersten Füllstoffs zwischen 100 µm und 800 µm ist, da durch eine Partikelgröße größer 100 µm die Gefahr einer Staubexplosion vermindert werden kann. Weiterhin kann vorgesehen sein, dass die Partikel des ersten Füllstoffs kantige Formen aufweisen. Durch die kantige Form der Partikel kann, bei Erzeugung einer Masse aus der Trockenmischung, auf einfachere Weise eine stabile Verbindung mit dem Bindemittel erhalten werden.

Für alle vorgenannten Ausführungsformen kann weiter vorgesehen sein, dass es sich bei den Pulverpartikeln des ersten Füllstoffs um pyrolysierte pflanzenbasierte Kohlenhydrate, insbesondere lignocellulose-haltige Reststoffe, handelt.

Pyrolysierte pflanzenbasierte Kohlenhydrate bilden die Zellwand verholzter Pflanzen und dienen ihnen als Strukturgerüst. Die pyrolysierte pflanzenbasierte Kohlenhydrate können als Baustoff oder Brennstoff verwendet werden. Dennoch entstehen jährlich große Mengen an nicht verwerteten Cellulose-Reststoffen sowie lignocellulose-haltigen Reststoffen, die thermisch entsorgt werden müssen, was zu einem Anstieg von Kohlendioxid in der Atmosphäre führt. Dadurch, dass es sich bei dem ersten Füllstoff um pyrolysierte lignocellulose-haltige Reststoffe handeln kann, könnten die pyrolysierten Cellulose-Reststoffe sowie lignocellulose-haltigen Reststoffe als erster Füllstoff verwendet werden und müssten nicht thermisch entsorgt werden.

Weiterhin kann für alle vorgenannten Ausführungsformen vorgesehen sein, dass der erste pulverförmige Füllstoff ein Pulver aus Verkohlung von Pflanzenmaterial gebildeter Kohle ist, wobei die Kohle Aktivkohle ist bzw. aktiviert wurde.

Die Verwendung von Aktivkohle beziehungsweise von aktivierter Kohle kann vorteilhaft sein, da Aktivkohle ein poröser, feinkörniger Kohlenstoff mit großer innerer Oberfläche ist, der als Adsorptionsmittel unter anderem in Chemie, Medizin, Trinkwasseraufbereitung, Abwasserbehandlung sowie Lüftungs- und Klimatechnik eingesetzt werden kann.

Für alle vorgenannten Ausführungsformen kann weiterhin vorteilhaft vorgesehen sein, dass die Trockenmischung bezogen auf das Gesamtgewicht ferner wenigstens eines umfasst von:
d. 0,05 bis 2,00 Gew.-% eines pulverförmigen Schäumungsmittels,
e. 0,05 bis 2,00 Gew.-% eines pulverförmigen oberflächenaktivierenden Stoffes,
f. 0,05 bis 2,00 Gew.-% eines pulverförmigen Additivs,
g. 0,5 bis 20,0 Gew.-% eines zweiten pulverförmigen Füllstoffs, und
h. 0,5 bis 20 ,0 Gew.-% Naturfasern.

Bei dem pulverförmigen Schäumungsmittel kann es sich um eine Mischung aus einer Kohlenstoffdioxid-Quelle, meist Natriumhydrogencarbonat (NaHCO₃) oder Kaliumhydrogencarbonat, und einem Säuerungsmittel, meist Essigsäure, Weinsäure, Dinatriumdihydrogendiphosphat (E 450a) oder Monocalciumorthophosphat (E 341a) als Säureträger oder um andere physikalische, chemische oder mechanische Schäumungsmittel, wie z.B. Kohlendioxid oder Pentan, handeln. Durch die Anwendung eines Schäumungsmittels kann die Dichte einer herzustellenden Masse oder eines Körpers durch das Einbringen von Gaseinschlüssen, insbesondere Kohlenstoffdioxid, reduziert werden. Weiterhin kann durch die Menge an Schäumungsmittel die Anzahl der Gaseinschlüsse variiert werden, wobei eine hohe Anzahl an Gaseinschlüssen den Schallschutzfaktor und den Isolationsfaktor einer herzustellenden Masse oder eines Körpers erhöht.

Ein oder mehrere pulverförmige oberflächenaktivierende Stoffe könnten hinzugefügt werden, die bewirken, dass sich die Oberfläche des ersten Füllstoffs besser mit dem

Bindemittel verbindet. Die oberflächenaktivierenden Stoffe können natürliche Stabilisatoren oder amphiphile Moleküle (surfactants) sein, die insbesondere bewirken können, dass ein stabiles kolloidales System oder eine Suspension von dem ersten Füllstoff in einer ausgewählten flüssigen Komponente erzeugt wird und/oder ein kolloidales System mit Bindemittel und der ausgewählten flüssigen Komponente entwickelt wird.

Das pulverförmige Additiv könnte hinzugefügt werden, um Produkteigenschaften zu verändern. Beispielsweise kann das Additiv ein Flammschutzmittel sein, beispielsweise Tricresylphosphat, oder ein natürlicher Stabilisator (Hydrocolloids) sein, beispielsweise ausgewählt aus der Gruppe bestehend aus Agar, Alginate, carageenans, guar, konjac, tragacanth, locust bean gum, psyllium, tara gum, xanthan gum, fenugreek gum und Stärke, oder ein Antioxidationsmittel sein, beispielsweise ausgewählt aus der Gruppe bestehend aus pulverförmigen Vitamin C und/oder E, Polyphenolen (Tanninen, Ligninen und Huminen) und Carotenoiden (Lycopene).

Ebenso könnte ein zweiter pulverförmiger Füllstoff vorgesehen sein. Der zweite pulverförmige Füllstoff kann beispielsweise Calciumsulfat, Magnesiumsulfat, Calciumcarbonat, Hydroxylapatit, Titandioxid oder Silikat oder Aluminiumsilikat, hier insbesondere Quarz, Glas, Zeolithe, Kaolinit, Mica (Glimmer) oder eine Mischung der vorgenannten Füllstoffe sein. Die Verwendung von den zweiten pulverförmigen Füllstoffen kann Eigenschaften wie Festigkeit und Stabilität (durch Bindung von Wasser), Brennbarkeit, Witterungsbeständigkeit und chemische Beständigkeit erhöhen. Zusätzlich könnten durch das Auffüllen mit dem zweiten pulverförmigen Füllstoff das Auffüllen mit anderen, oftmals teureren, Grundstoffen vermieden werden ohne dass dies zu Nachteilen von Eigenschaften führt.

Naturfasern könnten ebenso in der Trockenmischung umfasst sein. Als Naturfasern eignen sich insbesondere Flachsfasern, Hanffasern, Sisalfasern oder Bambusfasern. Die Fasern könnten zur Erhöhung der Druck-, Zug- und Scherfestigkeit hinzugefügt werden.

Beispielsweise umfasst die Trockenmischung, die zur Herstellung einer Masse oder zur Herstellung eines Formkörpers aus einer Masse vorgesehen ist, 10 bis 90 Gew.-% des pulverförmigen Bindemittels, 7 bis 80 Gew.-% aus dem pulverförmigen Füllstoff und 0,05 bis 2,0 Gew.-% eines pulverförmigen Schäumungsmittels, insbesondere Backpulver. Ebenso kann die Trockenmischung 10 bis 80 Gew.-% des pulverförmigen Bindemittels, 7 bis 70 Gew.-% aus dem pulverförmigen Füllstoff und 0,5 bis 20,0 Gew.-% eines zweiten pulverförmigen Füllstoffs umfassen.

Es versteht sich von selbst, dass bei der nachfolgenden Beschreibung der vorliegenden Erfindung solche Ausgestaltungen, Ausführungsformen, Vorteile, Beispiele oder dergleichen, welche nachfolgend - zu Zwecken der Vermeidung unnötiger Wiederholungen - nur zu einem einzelnen Erfindungsaspekt ausgeführt werden, selbstverständlich auch in Bezug auf die übrigen Erfindungsaspekte entsprechend gelten, ohne dass es hierzu einer ausdrücklichen Erwähnung bedarf.

Im Übrigen gilt, dass bei sämtlichen nachstehend aufgeführten relativen bzw. prozentualen, insbesondere gewichtsbezogenen Mengenangaben zu beachten ist, dass diese Angaben im Rahmen der vorliegenden Erfindung vom Fachmann derart auszuwählen bzw. zu kombinieren sind, dass in der Summe - gegebenenfalls unter Einbeziehung weiterer Komponenten bzw. Inhaltsstoffe, insbesondere wie nachfolgend definiert - stets 100 % bzw. 100 Gew.-% resultieren.

Ein weiterer Aspekt der vorliegenden Erfindung betrifft eine Masse in gieß- oder teigförmiger Form. Die Masse umfasst
a. 10 bis 90 Gew.-% wenigstens eines Bindemittels, wobei das Bindemittel ein Gemisch aus Gelatine und Hämoglobin oder ein Gemisch aus Gelatine, Hämoglobin und Milcheiweißumfasst;
b. 5 bis 50 Gew.-% eines ersten pulverförmigen Füllstoffs, wobei der erste pulverförmige Füllstoff ein Pulver aus Verkohlung von Pflanzenmaterial gebildeter Kohle ist; und
c. 5 bis 90 Gew.-% einer flüssigen Komponente, wobei die flüssige Komponente ausgewählt ist aus einer Gruppe bestehend aus Wasser, Glycerin, Alkohol, Öl, Wasserglas und Gemischen davon.

Das Gesamtgewicht der Masse aus 10 bis 90 Gew.-% wenigstens eines pulverförmigen Bindemittels, 5 bis 50 Gew.-% eines ersten pulverförmigen Füllstoffs und 5 bis 90 Gew.-% einer flüssigen Komponente ergibt 100 Gew.-%. Die Masse kann aus einer zuvor beschriebenen Trockenmischung unter Verwendung oder Zugabe einer flüssigen Komponente hergestellt sein. Das Bindemittel und der erster Füllstoff entsprechen dem Bindemittel und dem ersten Füllstoff, die bereits zu der Trockenmischung beschrieben wurden. Dementsprechend kann für eine Ausgestaltung vorgesehen sein, dass das Bindemittel ein Gemisch aus Gelatine und Hämoglobin ist. Ebenso kann für den ersten Füllstoff vorgesehen sein, dass die Pulverpartikel des ersten Füllstoffs eine Partikelgröße von 1 µm bis 800 µm, von 10 µm bis 600 µm oder von 100 µm bis 400 µm, aufweisen und/oder dass es sich bei den Pulverpartikeln des ersten Füllstoffs um pyrolysierte pflanzenbasierte Kohlenhydrate, insbesondere lignocellulose-haltige Reststoffe, handelt und/oder dass der erste pulverförmige Füllstoff ein Pulver aus Verkohlung von Pflanzenmaterial gebildeter Kohle ist, wobei die Kohle Aktivkohle ist.

Die flüssige Komponente dient als Lösungsmittel für das Bindemittel und dient damit dem Verbinden des ersten Füllstoffs in die Matrix. Durch die flüssige Komponente kann das Bindemittel hydrolysiert werden. Zum Hydrolysieren eignet sich insbesondere Wasser, hier insbesondere demineralisiertes Wasser, als flüssige Komponente. Ebenfalls geeignet als flüssige Komponente sind jedoch auch Glycerin, Alkohol, Öl, flüssiges Wasserglas oder Gemische hiervon oder Gemische mit Wasser, wobei Glycerin, Alkohol, Öl und flüssiges Wasserglas zudem die Verbindung des ersten Füllstoffs mit dem Bindemittel verbessern könnte. Wasserglas, insbesondere Kaliwasserglas, Natronwasserglas, Lithiumwasserglas, ist als klare, kolloide alkalische Lösung oder auch als alkalisches Gel (gallertartige bis feste Masse) verwendbar. Bei der Anwendung zur Herstellung eines Körper, insbesondere eines Formkörpers oder einer Folie, verdunstet das Lösungsmittel Wasser und es erfolgt die Imprägnierung oder Umwandlung eines natürlich vorkommenden mineralischen oder organischen Materials mit bzw. zu mikrokristallinem Siliziumdioxid (SiO₂). Die Verkieselung (Silifizierung) kann erfolgen durch die Ausfällung von gelöstem SiO₂ im Porenraum von Sedimenten oder Böden oder durch metasomatische oder diagenetische Verdrängung von anderen Mineralen durch das SiO₂ (Auflösung des Vorgängerminerals bei simultaner Ausfällung von SiO₂). Wasserglas kann zur Aufwertung der Masse führen, da die Anwesenheit von Wasserglas zu einer besseren Verbindung der Kohlepartikelporen des ersten Füllstoffs mit der Bindemittelmatrix führen kann, eine Erhöhung des Flammschutzes, der Feuchtigkeitsresistenz und der Korrosionsbeständigkeit bewirken kann, weiterhin Einfluss auf die Farbgebung und die Wirkung im Boden als Pflanzenstärkungsmittel hat uns zur Verbesserung der Verarbeitbarkeit im Herstellprozess des Körpers beitragen kann.

Beispielsweise umfasst die Masse 10 bis 80 Gew.-% des Bindemittels, 5 bis 50 Gew.-% des ersten Füllstoffs und 5,0 bis 70,0 Gew.-% der flüssigen Komponente. Ebenso ist vorstellbar, dass die Masse 10 bis 80 Gew.-% des Bindemittels, 5 bis 50 Gew.-% des ersten Füllstoffs und 5,0 bis 60,0 Gew.-% der flüssigen Komponente umfasst. Ebenso ist vorstellbar, dass die Masse 10 bis 60 Gew.-% technische Gelatine, 10 bis 60 Gew.-% Hämoglobin, 5 bis 50 Gew.-% des ersten Füllstoffs, 0 bis 10 Gew.-% Wasserglas, 5 bis 40 Gew.-% Wasser und 0 bis 20 Gew.-% Glycerin umfasst. Weiterhin kann vorteilhaft vorgesehen sein, dass die Masse 20 bis 60 Gew.-% technische Gelatine, 20 bis 60 Gew.-% Hämoglobin, 10 bis 40 Gew.-% des ersten Füllstoffs, 0 bis 7 Gew.-% Wasserglas, 10 bis 30 Gew.-% Wasser und 0 bis 10 Gew.-% Glycerin umfasst. Weiterhin kann vorteilhaft vorgesehen sein, dass die Masse 40 bis 60 Gew.-% technische Gelatine, 40 bis 60 Gew.-% Hämoglobin, 15 bis 30 Gew.-% des ersten Füllstoffs, 0 bis 5 Gew.-% Wasserglas, 10 bis 20 Gew.-% Wasser und 0 bis 10 Gew.-% Glycerin umfasst.

Hierbei kann vorgesehen sein, dass die Masse bezogen auf das Gesamtgewicht ferner wenigstens eines umfasst von:

| | | |
|---|---|---|
| d. | 0,046 bis 1,9 Gew.-% | eines pulverförmigen Schäumungsmittels, |
| e. | 0,046 bis 1,9 Gew.-% | eines pulverförmigen oberflächenaktivierenden Stoffes, |
| f. | 0,046 bis 1,9 Gew.-% | eines pulverförmigen Additivs, |
| g. | 0,475 bis 19,0 Gew.-% | eines zweiten pulverförmigen Füllstoffs, und |
| h. | 0,475 bis 19,0 Gew.-% | Naturfasern. |

Weiterhin könnte die Masse bezogen auf das Gesamtgewicht ferner wenigstens eines umfasst von:

| | | |
|---|---|---|
| d. | 0,046 bis 1,9 Gew.-% | eines flüssigen Schäumungsmittels, |
| e. | 0,046 bis 1,9 Gew.-% | eines flüssigen oberflächenaktivierenden Stoffes, und |
| f. | 0,046 bis 1,9 Gew.-% | eines flüssigen Additivs |

Beispielsweise umfasst die Masse 10 bis 80 Gew.-% des Bindemittels, 5 bis 50 Gew.-% des ersten Füllstoffs, 5,0 bis 70,0 Gew.-% der flüssigen Komponente und 0,046 bis 1,9 Gew.-% eines oberflächenaktivierenden Stoffes. Ebenso ist vorstellbar, dass die Masse 10 bis 60 Gew.-% technische Gelatine, 10 bis 60 Gew.-% Hämoglobin, 5 bis 50 Gew.-% des ersten Füllstoffs, 0 bis 10 Gew.-% Wasserglas, 5 bis 40 Gew.-% Wasser, 0 bis 20 Gew.-% Glycerin und 0,046 bis 1,9 Gew.-% eines oberflächenaktivierenden Stoffes oder eines Schäumungsmittels oder eines Additivs oder 0,475 bis 19,0 Gew.-% eines zweiten Füllstoffs oder Naturfasern umfasst. Weiterhin kann vorteilhaft vorgesehen sein, dass die Masse 20 bis 60 Gew.-% technische Gelatine, 20 bis 60 Gew.-% Hämoglobin, 10 bis 40 Gew.-% des ersten Füllstoffs, 0 bis 7 Gew.-% Wasserglas, 10 bis 30 Gew.-% Wasser, 0 bis 10 Gew.-% Glycerin, 0 bis 1,5 Gew.-% eines Schäumungsmittels, und 0,5 bis 1,5 Gew.-% eines oberflächenaktivierenden Stoffes oder 0,5 bis 1,5 Gew.-% eines Additives umfasst. Weiterhin kann vorteilhaft vorgesehen sein, dass die Masse 40 bis 60 Gew.-% technische Gelatine, 40 bis 60 Gew.-% Hämoglobin, 15 bis 30 Gew.-% des ersten Füllstoffs, 0 bis 5 Gew.-% Wasserglas, 10 bis 20 Gew.-% Wasser, 0 bis 10 Gew.-% Glycerin und 0,9 bis 1,1 Gew.-% eines Schäumungsmittels und/oder 0,9 bis 1,1 Gew.-% eines oberflächenaktivierenden Stoffes und/oder 0,9 bis 1,1 Gew.-% eines Additives umfasst.

Ein weiterer Aspekt der vorliegenden Erfindung betrifft ein Granulat. Das Granulat kann durch Extrudieren und Trocknen der zuvor beschriebenen Masse hergestellt werden. Es kann vorteilhaft vorgesehen sein, dass die Herstellung des Granulats bei Temperaturen < 40°C erfolgt. Es kann weiterhin vorteilhaft vorgesehen sein, dass das Granulat nach dem Trockenschritt noch 2 Gew.-% bis 10 Gew.-%, insbesondere 2 Gew.-% bis 4,5 Gew.-%, der flüssigen Komponente aufweist.

Ein weiterer Aspekt der vorliegenden Erfindung betrifft ein Verfahren zur Herstellung der zuvor beschriebenen Masse. Das Verfahren umfasst die Schritte
i. Vermischen, zum Erhalt einer homogenen Trockenmischung, von
   a. pulverförmigem Bindemittel, wobei das pulverförmige Bindemittel ein Gemisch aus Gelatine und Hämoglobin oder ein Gemisch aus Gelatine, Hämoglobin und Milcheiweißumfasst,
      mit
   b. erstem pulverförmigem Füllstoff, wobei der erste pulverförmige Füllstoff ein Pulver aus Verkohlung von Pflanzenmaterial gebildeter Kohle ist,
ii. Mischen der Trockenmischung aus Schritt i. mit
   c. einer flüssigen Komponente, wobei die flüssige Komponente ausgewählt ist aus einer Gruppe bestehend aus Wasser, Glycerin, Alkohol, Öl, Wasserglas und Gemischen davon.

Es kann vorteilhaft sein, dass die Reihenfolge der Schritte wie bei dem Verfahren zur Herstellung der Masse eingehalten wird, um eine homogene Mischung der Komponenten a., b., und c. zu erhalten und eine gute Vernetzung zwischen den Komponenten a., b., und c. zu erreichen. Die Masse könnte aber auch dadurch hergestellt werden, dass die Komponente a, mit der Komponente c. gemischt wird und nachfolgend die Komponente b. hinzugefügt wird. Weiterhin kann für das Verfahren vorgesehen sein, dass das Mischen bei einer Temperatur erfolgt, die bei circa 40°C liegt. Dadurch, dass das Mischen bei circa 40°C durchgeführt wird, könnten unnötige Heizkosten sowie ungewünschte etwaige chemischbiologische Reaktionen der Proteine vermieden werden.

Ein weiterer Aspekt der vorliegenden Erfindung betrifft ein alternatives Verfahren zur Herstellung der zuvor beschriebenen Masse. Das alternative Verfahren umfasst die Schritte
i. Bereitstellen eines zuvor beschriebenen Granulats und
ii. Mischen des Granulats aus Schritt i. mit einer flüssigen Komponente, wobei die flüssige Komponente ausgewählt ist aus einer Gruppe bestehend aus Wasser, Glycerin, Alkohol, Öl, Wasserglas und Gemischen davon.

Auch hier kann vorgesehen sein, dass das Mischen bei einer Temperatur erfolgt, die bei circa 40°C liegt.

Weiterhin wird ein Körper, insbesondere ein Formkörper oder eine Folie, angegeben. Der Körper, insbesondere ein Formkörper oder eine Folie, kann aus der zuvor beschriebenen Masse oder dem zuvor beschriebenen Granulat unter Zugabe einer flüssigen Komponente hergestellt werden.

Der hergestellte Körper kann ein Pflanztopf für Aufforstungsbäumchen, eine Schutzhülle für Baum- oder Pflanzensamen, eine Entsorgungskiste für Biomüll, ein Trockenbauteil, ein Dämmmaterial, insbesondere ein Dämmmaterial mit feuchtigkeitsausgleichenden und luftverbessernden Eigenschaften, ein Halbleiter- und Batterieelement, ein Verpackungsmaterial, ein Dekorationsartikel, ein Einwegprodukt, ein Möbel, eine vibrationshemmende Schicht, ein Bodenbelag, eine Beschichtung, Mulch, ein Elektrobauteil oder eine Hülle davon mit Abschirmung elektromagnetischer Strahlung, eine Folie, insbesondere für Landwirtschaft und Forstwirtschaft oder ein innerhalb eines definierten Zeitraums sich auflösendes Formteil, insbesondere ein Filterelement oder Düngerdepot, sein.

Dadurch, dass der Körper den ersten Füllstoff und damit Kohlenstoff in Pulverform aufweist, könnten die Nähstoff- und Wasserbilanz in den Böden, die mit dem Körper in Kontakt kommen, erheblich verbessert werden. Der Kohlenstoff könnte hierbei als Katalysator dienen und für Jahrhunderte unverändert im Boden eingebunden (Terra Preta) werden. Durch die kaskadenförmige Nutzung (Verkohlung von Pflanzenmaterial gebildeter Kohle - damit Energiegewinnung - Herstellung von Körpern, insbesondere Formkörper und Folien - Bodeneintrag) könnte das Material und die daraus hergestellten Körper einen aktiven Beitrag zur Senkung der CO₂-Belastung der Atmosphäre leisten.

Ein weiterer Vorteil für die Verwendung könnte sein, dass höhere Lebewesen (z.B. Nage- und Wildtiere, Vögel) die Körper, insbesondere Formkörper oder Folien, auf Grund des Kohlenstoffanteils nicht als Nahrungsmittel ansehen, sondern sich eher davon fernhalten würden. Bei z.B. Styroporprodukten kam es in der Vergangenheit vor, dass das Material als Nistmaterial genutzt wird. Bei Pflanztöpfchen oder Biomüllbehältnissen, die aus einer erfindungsgemäßen Masse hergestellt werden, könnte dies Nichtansehen als Nahrungsmittel von großem Vorteil sein, da z.B. Wildschweine oder Nagetiere die im Wald ausgepflanzten Jungbäume im Pflanztöpfchen nicht beschädigen würden und ein ungestörteres Anwachsen der Bäume gewährleistet werden könnte. Bakterien und andere Mikroorganismen könnten hingegen von dem ersten pulverförmigen Füllstoff (Kohlenstoff) als Wirkungsstandort angezogen werden, ohne ihn jedoch anzugreifen. Der Abbauprozess der Bindematrix bzw. des Bindemittels könnte dadurch weiterhin unter Kompost-Bedingungen oder im Boden beschleunigt werden, wodurch die Matrix als Nährstoff für Pflanzen schneller zur Verfügung stünde.

Ein weiterer Vorteil für die Verwendung könnte sein, dass durch die schwarze Farbe der Produkte, aufgrund des Anteils des ersten Füllstoffs in dem Körper, Licht absorbiert werden kann, wodurch ein UV-Schutz vorliegt.

Durch die Kompostierbarkeit des Materials und die positiven Eigenschaften des Kohlenstoffes im Kompost könnten die Produkte zudem direkt im Biomüll oder einfach im Garten auf dem Komposthaufen entsorgt werden.

Ein weiterer Aspekt der vorliegenden Erfindung betrifft ein Verfahren zur Herstellung eines Körpers, insbesondere eines Formkörpers oder einer Folie. Das Verfahren umfasst die Schritte
I. Einbringen der zuvor beschriebenen Masse in eine Kunststoffverarbeitungsanlage,
II. Formen des Körpers, insbesondere eines Formkörpers oder einer Folie, und
III. Trocknen des Körpers.

Die Herstellung des Körpers, insbesondere eines Formkörpers oder einer Folie, könnte durch die gängigen Urformverfahren, wie Extrudieren, Kalandrieren, Blasformen, Pultrodieren, Spritzgießen, Pressen oder Spritzpressen, Gießen, Rotationsformen, Wirbelsintern oder Schäumen erfolgen. Es kann vorteilhaft vorgesehen sein, dass die maximale Verarbeitungstemperatur weniger als 100°C beträgt. Das Trocknen kann durch Aushärten bei Umgebungstemperatur oder durch aktives Trocknen bei Temperaturen größer 40°C erfolgen. Bevorzugt wird der Körper so lange getrocknet, bis der Gewichtsanteil der flüssigen Komponente unter 2,5 Gew.-% liegt, bevorzugt unter 2 Gew.-% liegt.

Der Körper, insbesondere ein Formkörper oder eine Folie, enthält erfindungsgemäß eine zuvor beschriebene Trockenmischung. Durch die Auswahl der Komponenten der Trockenmischung kann vorgesehen sein, dass der Körper vollständig kompostierbar ist.

Die zuvor beschriebenen Trockenmischung oder das zuvor beschriebene Granulat kann somit zur Herstellung der zuvor beschriebenen Masse in gieß- oder teigförmiger Formverwendet werden. Hierfür kann die Trockenmischung oder das zuvor beschriebene Granulat mit einer flüssigen Komponente vermischt werden.

Weiterhin kann die zuvor beschriebene Masse in gieß- oder teigförmiger Form zur Herstellung eines Körpers, insbesondere eines Formkörpers oder einer Folie, verwendet werden.

Es sei angemerkt, dass sich die obig beschriebenen Ausführungsformen in beliebiger Weise miteinander kombinieren lassen, sofern dem nichts aus logischen Gründen entgegensteht.

Im Folgenden werden Ausführungsformen anhand der nachfolgenden Zeichnungen näher erläutert.
- Fig. 1: zeigt ein Flussdiagramm eines Verfahrens zur Herstellung einer gieß- oder teigförmigen Masse, wobei die Masse zur Herstellung eines Körpers, insbesondere eines Formkörpers oder einer Folie, geeignet ist,
- Fig. 2: zeigt ein Flussdiagramm eines Verfahrens zur Herstellung eines Granulates, wobei das Granulat zur Herstellung einer Masse geeignet ist, wobei die Masse zur Herstellung eines Körpers, insbesondere eines Formkörpers oder einer Folie, verwendet werden kann,
- Fig. 3: zeigt ein Flussdiagramm eines Verfahrens zur Herstellung eines Körpers, insbesondere eines Formkörpers oder einer Folie, und
- Fig. 4: zeigt die Seitenansicht eines Formkörpers, hier eines Pflanztopfes, der aus einer Masse in gieß- oder teigförmiger Form hergestellt ist.

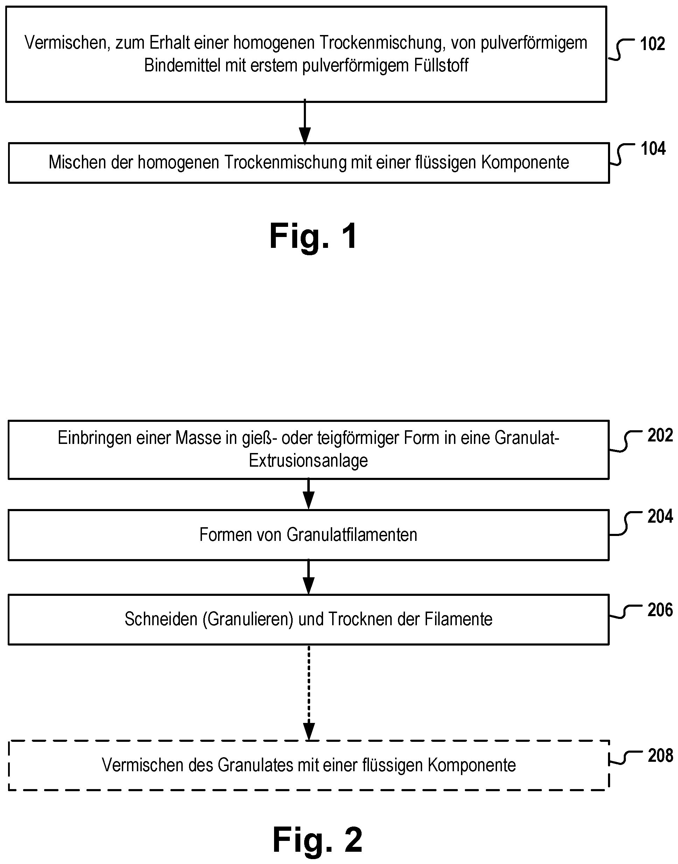

**Figur 1** zeigt ein Flussdiagramm eines Verfahrens zur Herstellung einer gieß- oder teigförmigen Masse. In einem ersten Schritt 102 wird ein pulverförmiges Bindemittel, wobei das pulverförmige Bindemittel ein Gemisch aus Gelatine und Hämoglobin oder ein Gemisch aus Gelatine, Hämoglobin und Milcheiweißumfasst, mit einem erstem pulverförmigem Füllstoff, wobei der erste pulverförmige Füllstoff ein Pulver aus Verkohlung von Pflanzenmaterial gebildeter Kohle ist, vermischt. Das Vermischen wird vorgenommen bis eine homogene Trockenmischung aus Bindemittel und erstem Füllstoff erhalten wird. In einem weiteren Schritt 104 wird die in dem ersten Schritt 102 hergestellte homogene Trockenmischung mit einer flüssigen Komponente vermischt. Die flüssige Komponente kann Wasser, Glycerin, Alkohol, Öl, Wasserglas und Gemische von den vorgenenannten flüssigen Komponenten sein. Für den Fall, dass die flüssige Komponente eine Gemisch ist, beispielsweise ein Gemisch aus Glycerin und Wasser, könnte vorgesehen sein, dass die Mischung des Gemisches der flüssigen Komponenten bei bis ca. 40°C erfolgt. Der Gewichtprozentanteil der Komponenten (a) Bindemittel, (b) erstem pulverförmigen Füllstoff und (c) flüssiger Komponente könnte derart gewählt sein, dass die gieß- oder teigförmige Masse nach dem Schritt 102 (a) 10 bis 90 Gew.-% wenigstens eines Bindemittels, wobei das Bindemittel ein Gemisch aus Gelatine und Hämoglobin oder ein Gemisch aus Gelatine, Hämoglobin und Milcheiweißumfasst, (b) 5 bis 50 Gew.-% eines ersten pulverförmigen Füllstoffs, wobei der erste pulverförmige Füllstoff ein Pulver aus Verkohlung von Pflanzenmaterial gebildeter Kohle ist und (c) 5 bis 90 Gew.-% einer flüssigen Komponente, wobei die flüssige Komponente ausgewählt ist aus einer Gruppe bestehend aus Wasser, Glycerin, Alkohol, Öl, Wasserglas und Gemischen davon, umfasst. Der Gewichtprozentanteil der Komponenten (a) Bindemittel, (b) erstem pulverförmigen Füllstoff und (c) flüssiger Komponente könnte auch derart gewählt sein, dass die gieß- oder teigförmige Masse nach dem Schritt 102 (a) 10 bis 80 Gew.-% wenigstens eines Bindemittels, wobei das Bindemittel ein Gemisch aus Gelatine und Hämoglobin oder ein Gemisch aus Gelatine, Hämoglobin und Milcheiweißumfasst, (b) 5 bis 50 Gew.-% eines ersten pulverförmigen Füllstoffs, wobei der erste pulverförmige Füllstoff ein Pulver aus Verkohlung von Pflanzenmaterial gebildeter Kohle ist und (c) 5 bis 25 Gew.-% einer flüssigen Komponente, wobei die flüssige Komponente ausgewählt ist aus einer Gruppe bestehend aus Wasser, Glycerin, Alkohol, Öl, Wasserglas und Gemischen davon, umfasst. Die Mengenangaben werden hierbei derart gewählt, dass in der Summe, gegebenenfalls unter Einbezug optionaler weiterer Inhaltsstoffe oder Komponenten, 100 Gew.-% resultieren. Dementsprechend könnte die Masse ferner einen oder mehrere der nachfolgenden Komponenten umfassen: (d.) 0,046 bis 1,9 Gew.-% eines pulverförmigen oder flüssigen Schäumungsmittels, (e.) 0,046 bis 1,9 Gew.-% eines pulverförmigen oder flüssigen oberflächenaktivierenden Stoffes, (f.) 0,046 bis 1,9 Gew.-% eines pulverförmigen oder flüssigen Additivs, (g.) 0,475 bis 19,0 Gew.-% eines zweiten pulverförmigen Füllstoffs, und (h.) 0,475 bis 19,0 Gew.-% Naturfasern.

**Figur 2** zeigt ein Flussdiagramm eines Verfahrens zur Herstellung eines Granulates aus einer gieß- oder teigförmigen Masse. Bei der gieß- oder teigförmigen Masse kann es sich um die gieß- oder teigförmige Masse handeln, die gemäß einem zu Fig. 1 beschriebenen Verfahren hergestellt wurde. In einem ersten Schritt 202 wird die gieß- oder teigförmige Masse in eine Granulat-Extrusionsanlage eingebracht. In der Granulat-Extrusionsanlage werden Granulatfilamente in einem weiteren Schritt 204 geformt. In einem nachfolgenden Schritt 206 werden die Granulatfilamente geschnitten (granuliert) und anschließend getrocknet. Das Granulat könnte nach dem Trockenschritt noch 2 Gew.-% bis 10 Gew.-%, insbesondere 2 Gew.-% bis 4,5 Gew.-%, einer flüssigen Komponente aufweisen. Um beispielsweise das Gewicht des Granulats weiter zu reduzieren, könnte weiterhin vorgesehen sein, dass das Granulat einem weiteren Trockenschritt unterworfen wird, wobei die Dauer des Trockenschritts derart gewählt sein könnte, so dass der Restfeuchteanteil der flüssigen Komponente in dem Granulat zwischen 1,5 Gew.-% und 3,5 Gew.-% liegt. Das Granulat könnte gelagert werden bis es, beispielsweise zur Herstellung der gieß- oder teigförmigen Masse, benötigt wird. Zur Herstellung der Masse aus dem Granulat könnte das Granulat in einem weiteren Schritt bereitgestellt werden und in einem nachfolgenden Schritt 208 mit einer flüssigen Komponente, wobei die flüssige Komponente ausgewählt ist aus einer Gruppe bestehend aus Wasser, Glycerin, Alkohol, Öl, Wasserglas und Gemischen davon, vermischt werden.

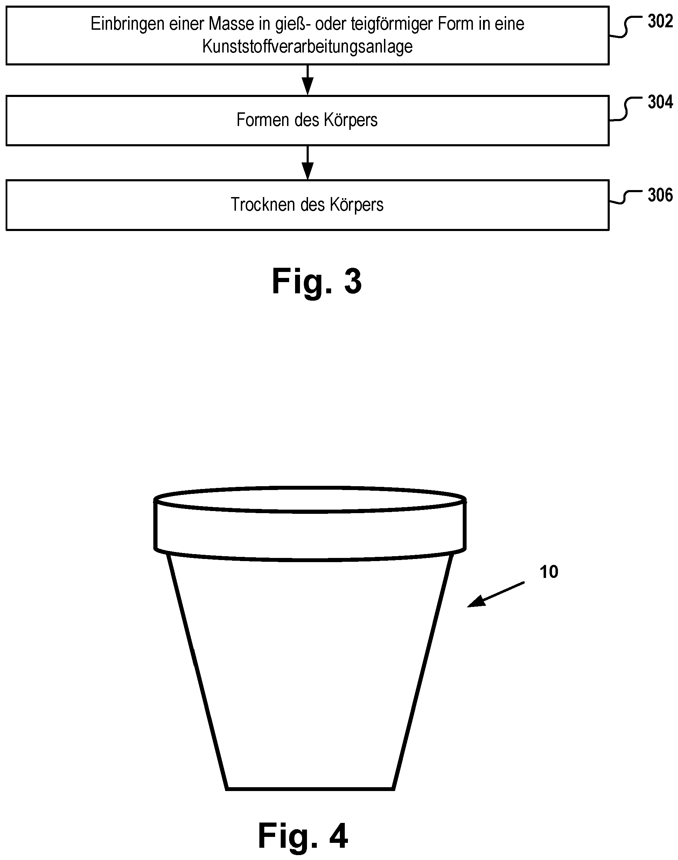

**Figur 3** zeigt ein Flussdiagramm eines Verfahrens zur Herstellung eines Körpers, insbesondere eines Formkörpers oder einer Folie. Der hergestellte Körper könnte ein Pflanztopf für Aufforstungsbäumchen, eine Schutzhülle für Baum- oder Pflanzensamen, eine Entsorgungskiste für Biomüll, ein Trockenbauteil, ein Dämmmaterial, insbesondere ein Dämmmaterial mit feuchtigkeitsausgleichenden und luftverbessernden Eigenschaften, ein Halbleiter- und Batterieelement, ein Verpackungsmaterial, ein Dekorationsartikel, ein Einwegprodukt, ein Möbel, eine vibrationshemmende Schicht, ein Bodenbelag, eine Beschichtung, Mulch, ein Elektrobauteil oder eine Hülle davon mit Abschirmung elektromagnetischer Strahlung, eine Folie, insbesondere für Landwirtschaft und Forstwirtschaft oder ein innerhalb eines definierten Zeitraums sich auflösendes Formteil, insbesondere ein Filterelement oder Düngerdepot, sein. In einem ersten Schritt 302 wird eine gieß- oder teigförmige Masse in eine Kunststoffverarbeitungsanlage eingebracht. Bei der gieß- oder teigförmigen Masse kann es sich um eine gieß- oder teigförmige Masse handeln, die aus einer homogenen Trockenmischung und einer flüssigen Komponente, entsprechend dem zu Figur 1 beschriebenen Verfahren, hergestellt wurde. Ebenso kann es sich bei der gieß- oder teigförmigen Masse um eine gieß- oder teigförmige Masse handeln, die aus einem Granulat und einer flüssigen Komponente, entsprechend dem zu Figur 2 (s. Schritt 208) beschriebenen Verfahren, hergestellt wurde. Die gieß- oder teigförmige Masse umfasst (a) 10 bis 90 Gew.-% wenigstens eines Bindemittels, wobei das Bindemittel ein Gemisch aus Gelatine und Hämoglobin oder ein Gemisch aus Gelatine, Hämoglobin und Milcheiweißumfasst, (b) 5 bis 50 Gew.-% eines ersten pulverförmigen Füllstoffs, wobei der erste pulverförmige Füllstoff ein Pulver aus Verkohlung von Pflanzenmaterial gebildeter Kohle ist und (c) 5 bis 90 Gew.-% einer flüssigen Komponente, wobei die flüssige Komponente ausgewählt ist aus einer Gruppe bestehend aus Wasser, Glycerin, Alkohol, Öl, Wasserglas und Gemischen davon. Die Kunststoffverarbeitungsanlage könnte jede dem Fachmann bekannte Kunststoffverarbeitungsanlage sein, in der eines der gängigen Urformverfahren (Schritt 304) erfolgen könnte, wie Extrudieren, Kalandrieren, Blasformen, Pultrodieren, Spritzgießen, Pressen oder Spritzpressen, Gießen, Rotationsformen, Wirbelsintern oder Schäumen. In der Kunststoffverarbeitungsanlage wird in einem weiteren Schritt 304 der Körper geformt. In einem weiteren Schritt 306 wird der Körper getrocknet. Es könnte vorgesehen sein, dass der Trockenschritt 306 durch Aushärten bei Umgebungstemperatur oder durch aktives Trocknen bei Temperaturen größer 40°C erfolgt.

Weiterhin könnte der Schritt 306 so lange durchgeführt werden, bis der Gewichtsanteil der flüssigen Komponente unter 2,5 Gew.-% liegt, bevorzugt unter 2 Gew.-% liegt.

**Figur 4** zeigt die Seitenansicht eines Formkörpers 10, hier eines Pflanztopfes. Der Formkörper 10 wurde aus einer Masse in gieß- oder teigförmiger Form, deren Herstellung zu Fig. 1 und Fig. 2 (s. Schritt 208) beschrieben wurde, gemäß dem zu Fig. 3 beschriebenen Verfahren hergestellt.

### Liste der Referenznummern

- 10: Formkörper, hier Pflanztopf
- 102-104: Verfahrensschritte
- 202-208: Verfahrensschritte
- 302-306: Verfahrensschritte

## Patentansprüche

1. Trockenmischung, **dadurch gekennzeichnet, dass** die Trockenmischung bezogen auf das Gesamtgewicht
a. 10 bis 93 Gew.-% wenigstens eines pulverförmigen Bindemittels, wobei das Bindemittel ein Gemisch aus Gelatine und Hämoglobin umfasst; und
b. 7 bis 90 Gew.-% eines ersten pulverförmigen Füllstoffs, wobei der erste pulverförmige Füllstoff ein Pulver aus Verkohlung von Pflanzenmaterial gebildeter Kohle ist;
umfasst.

2. Trockenmischung gemäß Anspruch 1, wobei das pulverförmige Bindemittel weiterhin Milcheiweiß umfasst.

3. Trockenmischung gemäß Anspruch 1 oder Anspruch 2, wobei die Pulverpartikel des ersten Füllstoffs eine Partikelgröße von 1 µm bis 800 µm, von 10 µm bis 600 µm oder von 100 µm bis 400 µm, aufweisen.

4. Trockenmischung gemäß einem der vorhergehenden Ansprüche, wobei es sich bei den Pulverpartikeln des ersten Füllstoffs um pyrolysierte pflanzenbasierte Kohlenhydrate, insbesondere lignocellulose-haltige Reststoffe, handelt.

5. Trockenmischung gemäß einem der vorhergehenden Ansprüche, wobei der erste pulverförmige Füllstoff ein Pulver aus Verkohlung von Pflanzenmaterial gebildeter Kohle ist, wobei die Kohle Aktivkohle ist.

6. Trockenmischung gemäß einem der vorhergehenden Ansprüche, wobei die Trockenmischung bezogen auf das Gesamtgewicht ferner wenigstens eines umfasst von:
d. 0,05 bis 2,00 Gew.-% eines pulverförmigen Schäumungsmittels,
e. 0,05 bis 2,00 Gew.-% eines pulverförmigen oberflächenaktivierenden Stoffes,
f. 0,05 bis 2,00 Gew.-% eines pulverförmigen Additivs,
g. 0,5 bis 20,0 Gew.-% eines zweiten pulverförmigen Füllstoffs, und
h. 0,5 bis 20 ,0 Gew.-% Naturfasern.

7. Masse in gieß- oder teigförmiger Form, **dadurch gekennzeichnet, dass** die Masse bezogen auf das Gesamtgewicht
a. 10 bis 90 Gew.-% wenigstens eines Bindemittels, wobei das Bindemittel ein Gemisch aus Gelatine und Hämoglobin oder ein Gemisch aus Gelatine, Hämoglobin und Milcheiweiß umfasst;
b. 5 bis 50 Gew.-% eines ersten pulverförmigen Füllstoffs, wobei der erste pulverförmige Füllstoff ein Pulver aus Verkohlung von Pflanzenmaterial gebildeter Kohle ist; und
c. 5 bis 90 Gew.-% einer flüssigen Komponente, wobei die flüssige Komponente ausgewählt ist aus einer Gruppe bestehend aus Wasser, Glycerin, Alkohol, Öl, Wasserglas und Gemischen davon;
umfasst.

8. Masse in gieß- oder teigförmiger Form gemäß Anspruch 7, wobei die Masse bezogen auf das Gesamtgewicht ferner wenigstens eines umfasst von:
d. 0,046 bis 1,9 Gew.-% eines pulverförmigen Schäumungsmittels,
e. 0,046 bis 1,9 Gew.-% eines pulverförmigen oberflächenaktivierenden Stoffes,
f. 0,046 bis 1,9 Gew.-% eines pulverförmigen Additivs,
g. 0,475 bis 19,0 Gew.-% eines zweiten pulverförmigen Füllstoffs, und
h. 0,475 bis 19,0 Gew.-% Naturfasern.

9. Granulat, hergestellt durch Extrudieren und Trocknen der Masse nach einem der Ansprüche 7 oder 8.

10. Körper, insbesondere ein Formkörper oder eine Folie, aus einer Masse nach einem der Ansprüche 7 oder 8 oder einem Granulat nach Anspruch 9.

11. Verfahren zur Herstellung der Masse nach Anspruch 7, mit den Schritten
i. Vermischen, zum Erhalt einer homogenen Trockenmischung, von
a. pulverförmigem Bindemittel, wobei das pulverförmige Bindemittel ein Gemisch aus Gelatine und Hämoglobin oder ein Gemisch aus Gelatine, Hämoglobin und Milcheiweiß umfasst,
mit
b. erstem pulverförmigem Füllstoff, wobei der erste pulverförmige Füllstoff ein Pulver aus Verkohlung von Pflanzenmaterial gebildeter Kohle ist,
ii. Mischen der Trockenmischung aus Schritt i. mit
c. einer flüssigen Komponente, wobei die flüssige Komponente ausgewählt ist aus einer Gruppe bestehend aus Wasser, Glycerin, Alkohol, Öl, Wasserglas und Gemischen davon.

12. Verfahren zur Herstellung der Masse nach Anspruch 7, mit den Schritten
i. Bereitstellen eines Granulats gemäß Anspruch 9 und
ii. Mischen des Granulats aus Schritt i. mit einer flüssigen Komponente, wobei die flüssige Komponente ausgewählt ist aus einer Gruppe bestehend aus Wasser, Glycerin, Alkohol, Öl, Wasserglas und Gemischen davon.

13. Verfahren zur Herstellung eines Körpers, insbesondere eines Formkörpers oder einer Folie, mit den Schritten
I. Einbringen der Masse gemäß Anspruch 7 in eine
Kunststoffverarbeitungsanlage,
II. Formen des Körpers, und
III. Trocknen des Körpers.

14. Verwendung einer Trockenmischung gemäß einem der Ansprüche 1 bis 6 oder eines Granulats gemäß Anspruch 9 zur Herstellung einer Masse in gieß- oder teigförmiger Form gemäß einem der Ansprüche 7 bis 8.

15. Verwendung einer Masse in gieß- oder teigförmiger Form gemäß einem der Ansprüche 7 oder 8 zur Herstellung eines Körpers, insbesondere eines Formkörpers oder einer Folie, wobei der Körper ein Pflanztopf für Aufforstungsbäumchen, eine Schutzhülle für Baum- oder Pflanzensamen, eine Entsorgungskiste für Biomüll, ein Trockenbauteil, ein Dämmmaterial, insbesondere ein Dämmmaterial mit feuchtigkeitsausgleichenden und luftverbessernden Eigenschaften, ein Halbleiter- und Batterieelement, ein Verpackungsmaterial, ein Dekorationsartikel, ein Einwegprodukt, ein Möbel, eine vibrationshemmende Schicht, ein Bodenbelag, eine Beschichtung, Mulch, ein Elektrobauteil oder eine Hülle davon mit Abschirmung elektromagnetischer Strahlung, eine Folie, insbesondere für Landwirtschaft und Forstwirtschaft oder ein innerhalb eines definierten Zeitraums sich auflösendes Formteil, insbesondere ein Filterelement oder Düngerdepot, ist.

16. Körper, insbesondere ein Formkörper oder eine Folie, enthaltend eine Trockenmischung gemäß einem der Ansprüche 1 bis 6.

17. Körper, insbesondere ein Formkörper oder eine Folie, gemäß Anspruch 16, **dadurch gekennzeichnet, dass** der Körper vollständig kompostierbar ist.

## Claims

1. Dry mix, **characterized in that** the dry mix contains, based on the total weight,
a. 10 to 93 wt.% of at least one powdered binder, the binder containing a mixture of gelatin and hemoglobin; and
b. 7 to 90 wt.% of a first powdered filler, the first powdered filler being a powder made of carbon formed by the carbonization of plant material.

2. Dry mix according to claim 1, wherein the powdered binder also contains milk protein.

3. Dry mix according to claim 1 or claim 2, **characterized in that** the powder particles of the first filler have a particle size of from 1 µm to 800 µm, from 10 µm to 600 µm, or from 100 µm to 400 µm.

4. Dry mix according to any of the preceding claims, wherein the powder particles of the first filler are pyrolyzed plant-based carbohydrates, in particular lignocellulose-containing residues.

5. Dry mix according to any of the preceding claims, wherein the first powdered filler is a powder made of carbon formed by the carbonization of plant material, the carbon being activated carbon.

6. Dry mix according to any of the preceding claims, wherein the dry mix further contains at least one of, based on the total weight:
d. 0.05 to 2.00 wt.% of a powdered foaming agent,
e. 0.05 to 2.00 wt.% of a powdered surface-activating substance,
f. 0.05 to 2.00 wt.% of a powdered additive,
g. 0.5 to 20.0 wt.% of a second powdered filler, and
h. 0.5 to 20.0 wt.% natural fibers.

7. Composition in a pourable or pasty form, **characterized in that** the composition contains, based on the total weight,
a. 10 to 90 wt.% of at least one binder, the binder containing a mixture of gelatin and hemoglobin or a mixture of gelatin, hemoglobin, and milk protein;
b. 5 to 50 wt.% of a first powdered filler, the first powdered filler being a powder made of carbon formed by the carbonization of plant material; and
c. 5 to 90 wt.% of a liquid component, the liquid component being selected from a group consisting of water, glycerin, alcohol, oil, water glass, and mixtures thereof.

8. Composition in a pourable or pasty form according to claim 7, wherein the composition further contains at least one of, based on the total weight:
d. 0.046 to 1.9 wt.% of a powdered foaming agent,
e. 0.046 to 1.9 wt.% of a powdered surface-activating substance,
f. 0.046 to 1.9 wt.% of a powdered additive,
g. 0.475 to 19.0 wt.% of a second powdered filler, and
h. 0.475 to 19.0 wt.% natural fibers.

9. Granulate produced by extruding and drying the composition according to any of claims 7 or 8.

10. Body, in particular a molded body or a film, made of a composition according to any of claims 7 or 8 or a granulate according to claim 9.

11. Method for producing the composition according to claim 7, comprising the steps of
i. mixing, to obtain a homogeneous dry mix,
a. powdered binder, the powdered binder containing a mixture of gelatin and hemoglobin or a mixture of gelatin, hemoglobin, and milk protein,
with
b. first powdered filler, the first powdered filler being a powder made of carbon formed by the carbonization of plant material,
ii. mixing the dry mix from step i. with
c. a liquid component, the liquid component being selected from a group consisting of water, glycerin, alcohol, oil, water glass, and mixtures thereof.

12. Method for producing the composition according to claim 7, comprising the steps of
i. providing a granulate according to claim 9 and
ii. mixing the granulate from step i. with a liquid component, the liquid component being selected from a group consisting of water, glycerin, alcohol, oil, water glass, and mixtures thereof.

13. Method for producing a body, in particular a molded body or a film, comprising the steps of
I. introducing the composition according to claim 7 into a plastics processing system,
II. molding the body, and
III. drying the body.

14. Use of a dry mix according to any of claims 1 to 6 or a granulate according to claim 9 for producing a composition in a pourable or pasty form according to any of claims 7 to 8.

15. Use of a composition in a pourable or pasty form according to any of claims 7 to 8 for producing a body, in particular a molded body or a film, the body being a plant pot for trees for reforestation, a protective covering for tree seeds or plant seeds, a disposal container for biodegradable waste, a dry construction part, an insulation material, in particular an insulation material having moisture-dispersant and air-improving properties, a semiconductor and battery element, a packaging material, a decorative item, a disposable product, a piece of furniture, a vibration-reducing layer, a floor covering, a coating, mulch, an electrical component or a sheath thereof with electromagnetic radiation shielding, a film, in particular for agriculture and forestry, or a molded part that dissolves within a specific time period, in particular a filter element or a deposit of fertilizer.

16. Body, in particular a molded body or a film, containing a dry mix according to any of claims 1 to 6.

17. Body, in particular a molded body or a film, according to claim 16, **characterized in that** the body is fully compostable.

## Revendications

1. Mélange sec **caractérisé en ce que** le mélange sec comprenne, par rapport au poids total,
a. de 10 à 93 % en poids d'au moins un liant sous forme de poudre, où le liant comprend un mélange de gélatine et d'hémoglobine ; et
b. de 7 à 90 % en poids d'une première charge sous forme pulvérulente, où la première charge sous forme pulvérulente est une poudre provenant de la carbonisation d'un charbon formé par de la matière végétale.

2. Mélange sec selon la revendication 1, dans lequel le liant sous forme de poudre comprend en outre de l'albumine de lait.

3. Mélange sec selon la revendication 1 ou la revendication 2, dans lequel les particules de poudre de la première charge présentent une taille particulaire de 1 µm à 800 µm, de 10 µm à 600 µm ou de 100 µm à 400 µm.

4. Mélange sec selon l'une des revendications précédentes, dans lequel, dans le cas des particules de poudre de la première charge, il s'agit d'hydrates de carbone à base de plantes pyrolysés, notamment de résidus contenant de la lignocellulose.

5. Mélange sec selon l'une des revendications précédentes, dans lequel la première charge sous forme de poudre est une poudre provenant de la carbonisation d'un charbon formé par de la matière végétale, le charbon étant du charbon actif.

6. Mélange sec selon l'une des revendications précédentes, où le mélange sec comprend en outre, par rapport au poids total, au moins une substance parmi :
d. de 0,05 à 2,00 % en poids d'un agent moussant sous forme pulvérulente,
e. de 0,05 à 2,00 % en poids d'une substance d'activation de la surface sous forme pulvérulente.
f. de 0,05 à 2,00 % en poids d'un additif sous forme pulvérulente,
g. de 0,5 à 20,0 % en poids d'une deuxième charge sous forme pulvérulente, et
h. de 0,5 à 20,0 % en poids de fibres naturelles.

7. Masse sous forme versable ou pâteuse, **caractérisée en ce que** la masse comprend, par rapport au poids total,
a. de 10 à 90 % en poids d'au moins un liant, où le liant comprend un mélange de gélatine et d'hémoglobine ou un mélange de gélatine, d'hémoglobine et d'albumine de lait ;
b. de 5 à 50 % en poids d'une première charge sous forme pulvérulente, où la première charge sous forme pulvérulente est une poudre provenant de la carbonisation d'un charbon formé par de la matière végétale ; et
c. de 5 à 90 % en poids d'un composant liquide, où le composant liquide est choisi dans un groupe constitué de l'eau, de la glycérine, de l'alcool, de l'huile, du silicate de soude ou de mélanges de ceux-ci.

8. Masse sous forme versable ou pâteuse selon la revendication 7, où la masse, par rapport au poids total, comprend en outre au moins une substance parmi :
d. de 0,046 à 1,9 % en poids d'un agent moussant sous forme pulvérulente,
e. de 0,046 à 1,9 % en poids d'une substance d'activation de la surface sous forme pulvérulente.
f. de 0,046 à 1,9 % en poids d'un additif sous forme pulvérulente,
g. de 0,475 à 29,0 % en poids d'une deuxième charge sous forme pulvérulente, et
h. de 0,475 à 19,0 % en poids de fibres naturelles.

9. Granulat fabriqué par extrusion et séchage de la masse selon l'une des revendications 7 ou 8.

10. Corps, notamment corps moulé, ou feuille à base d'une masse selon l'une des revendications 7 ou 8 ou d'un granulat selon la revendication 9.

11. Procédé de fabrication d'une masse selon la revendication 7, avec les étapes
i. de mélange, jusqu'à l'obtention d'un mélange sec homogène,
a. d'un liant sous forme de poudre, où le liant sous forme de poudre comprend un mélange de gélatine et d'hémoglobine ou un mélange de gélatine, d'hémoglobine et d'albumine de lait,
avec
b. une première charge sous forme pulvérulente, où la première charge sous forme pulvérulente est une poudre provenant de la carbonisation d'un charbon formé par de la matière végétale,
ii. de mélange du mélange sec provenant de l'étape i. avec
c. un composant liquide, où le composant liquide est choisi dans un groupe constitué de l'eau, de la glycérine, de l'alcool, de l'huile, du silicate de soude ou de mélanges de ceux-ci.

12. Procédé de fabrication de la masse selon la revendication 7, avec les étapes
i. de mise au point d'un granulat selon la revendication 9 et
ii. de mélange du granulat provenant de l'étape i. avec un composant liquide, où le composant liquide est choisi dans un groupe constitué de l'eau, de la glycérine, de l'alcool, de l'huile, du silicate de soude ou de mélanges de ceux-ci.

13. Procédé de fabrication d'un corps, notamment d'un corps moulé, ou d'une feuille avec les étapes
I. d'incorporation de la masse selon la revendication 7 dans une installation de traitement de matière plastique,
II. de moulage du corps et
III. de séchage du corps.

14. Utilisation d'un mélange sec selon l'une des revendications 1 à 6 ou d'un granulat selon la revendication 9 pour la fabrication d'une masse sous forme versable ou pâteuse selon l'une des revendications 7 à 8.

15. Utilisation d'une masse sous forme versable ou pâteuse selon l'une des revendications 7 ou 8 pour la fabrication d'un corps, notamment un corps moulé, ou d'une feuille, où le corps est un pot de culture pour un arbuste de reboisement, une enveloppe de protection pour des semis d'arbres ou de plantes, une caisse de mise au rebut pour des déchets biologiques, un élément de cloison sèche, un matériau d'isolation, notamment un matériau d'isolation avec des propriétés équilibrant l'humidité et améliorant l'air, un élément semi-conducteur et un élément de batterie, un matériau d'emballage, un article de décoration, un produit à usage unique, un meuble, une couche empêchant les vibrations, un revêtement de sol, un revêtement, du paillis, un composant électrique ou une enveloppe de celui-ci avec un blindage de rayonnement électromagnétique, une feuille, notamment pour l'agriculture et la sylviculture, ou une pièce moulée se dissolvant en l'espace d'un intervalle de temps défini, notamment un élément de filtre ou un dépôt d'engrais.

16. Corps, notamment corps moulé, ou feuille contenant un mélange sec selon l'une des revendications 1 à 6.

17. Corps, notamment corps moulé, ou feuille selon la revendication 16, **caractérisé en ce que** le corps est totalement compostable.
